# EUROPÄISCHE PATENTANMELDUNG

(11) **EP 4 226 998 A1**
(43) Veröffentlichungstag der Anmeldung: **16.08.2023**
(21) Anmeldenummer: 22212277.2
(22) Anmeldetag: 08.12.2022
(51) Int. Cl.: B01J 19/00, B01J 19/24, F28C 3/02

(54) **ROHRLEITUNGSANORDNUNG ZUM STOPPEN EINER IN DER ROHRLEITUNGSANORDNUNG ABLAUFENDEN REAKTION UND EINE DIE ROHRLEITUNGSANORDNUNG AUFWEISENDE PROZESSANLAGE**

(30) Priorität: 26.01.2022 DE 102022200863
(71) Anmelder: Glatt Ingenieurtechnik Gessellschaft Mit Beschränkter Haftung, 99427 Weimar (DE)
(72) Erfinder: Ohlendorf, Frank, 99086 Erfurt (DE); Schimm, Michael, 99448 Kranichfeld (DE); Dahms, Norman, 99423 Weimar (DE)
(74) Vertreter: Patentanwälte Magenbauer & Kollegen Partnerschaft mbB

(57) **Zusammenfassung**

Die Erfindung betrifft eine Rohrleitungsanordnung (1) zum Stoppen einer in der Rohrleitungsanordnung (1) ablaufenden Reaktion sowie ein System aufweisend einen Hochtemperaturreaktor (22) und die Rohrleitungsanordnung (1) sowie eine darauf basierende Prozessanlage (21).

## Beschreibung

Die Erfindung betrifft eine Rohrleitungsanordnung zum Stoppen einer in der Rohrleitungsanordnung ablaufenden Reaktion, mit einem in einem Betriebszustand von einem Partikel fördernden Heißgas durchströmten und aufgrund der Durchströmung mit Heißgas eine Längenausdehnung erfahrenden Heißgasrohr, mit einem im Betriebszustand von einem im Vergleich zum Heißgas kälteren Quenchgas durchströmten Quenchgasrohr, und mit einem das Heißgasrohr und das Quenchgasrohr verbindendes Verbindungselement.

Ferner betrifft die Erfindung eine Prozessanlage zur Herstellung von insbesondere nanoskaligen Partikeln mit einem Hochtemperaturreaktor und einer mit dem Hochtemperaturreaktor verbundenen Rohrleitungsanordnung, wobei der Hochtemperaturreaktor ein zumindest teilweise durch die Rohrleitungsanordnung strömendes Heißgas erzeugt.

Bekannt sind offene und geschlossene Hochtemperaturprozesse bei denen Rohrleitungsanordnungen von einem Partikel fördernden Heißgas mit einer Temperatur von bis zu 1.400 °C durchströmt werden.

Die Offenlegungschrift DE 10 2006 039 462 A1 offenbart ein Verfahren zur Herstellung von Partikeln, bei dem eine Rohstoffmischung aus mindestens einer Rohstoffkomponente und mindestens einer Sorte von Impfkristallen hergestellt wird und bei dem die Rohstoffmischung in einen Heißgasstrom eines thermischen Reaktors mit pulsierender Verbrennung an einem Zuführungspunkt eingebracht wird und im Heißgasstrom die Partikel aus der Rohstoffmischung gebildet werden. Die Temperaturen des Heißgasstroms liegen hier zweckmäßigerweise im Bereich von 600 °C bis 1.400 °C. Zum Stoppen der Reaktion der Partikel im Heißgasstrom besteht die dem Heißgasstrom in einem dem Zuführungspunkt der Rohstoffmischung nachgelagerten Bereich durch Einleiten von Kühlluft und/oder durch Einsprühen von Wasser zu kühlen.

Die Verbindung solcher thermischer Reaktoren und der das Heißgas führenden Heißgasrohre mit daran anschließenden Rohrleitungen bedarf wegen der großen auftretenden Differenzen in der thermischen Längenausdehnung der Ausrüstungen und Rohrleitungen einer besonderen Betrachtung. Üblicherweise werden zur Kompensation der Längenausdehnung offene oder teils offene Schiebestücke, Rohrkompensatoren eingesetzt.

Nachteilig an der im Stand der Technik dargestellten Rohrleitungsanordnung ist, dass eine direkte Anbindung des Heißgasrohrs an das Quenchgasrohr aufgrund der auftretenden hohen Temperaturen von bis zu 1.400 °C nicht möglich ist.

Aufgabe der Erfindung ist es daher eine Rohrleistungsanordnung bereitzustellen, die eine Anbindung des Heißgasrohrs an das Quenchgasrohr erlaubt.

Diese Aufgabe wird bei einer Rohrleitungsanordnung der eingangs genannten Art dadurch gelöst, dass das Heißgasrohr das Verbindungselement durchdringt und das Verbindungselement geeignet ist, um einen eine in Strömungsrichtung des Quenchgases weisende Austrittsöffnung für das Heißgas aufweisenden Rohrendabschnitt des Heißgasrohrs im Quenchgasrohr anzuordnen, wobei der Rohrendabschnitt in einem Einbauzustand, in dem die Rohrleitungsanordnung nicht durchströmt ist, in einer Einbauposition angeordnet ist, und wobei das Verbindungselement ausgebildet ist, um die im Betriebszustand auftretende Längenausdehnung des Heißgasrohrs derart aufzunehmen, dass eine Positionsänderung des Rohrendabschnitts von der Einbauposition in eine Betriebsposition bewirkt wird, sodass das im Betriebszustand aus der Austrittsöffnung in das Quenchgasrohr ausströmende Heißgas vom Quenchgas umhüllt wird.

Vorteilhafterweise wird durch eine solche Anordnung erreicht, dass das von einem Partikel fördernden Heißgas durchströmte und aufgrund der Durchströmung mit Heißgas eine Längenausdehnung erfahrende Heißgasrohr an das Quenchgasrohr anordenbar ist. Das Heißgasrohr ist dazu ausgebildet, um von einem Heißgas zu durchströmbar zu sein. Das Heißgasrohr kann dabei längliche Bereiche und Umlenkungen umfassen. Die Durchmesser können konstant sein oder sich ändern. Das Heißgasrohr kann aus einem hitzebeständigen Werkstoff bestehen. Das Heißgasrohr kann weiterhin zumindest teilweise einen Isolationsmantel bzw. ein Isoliermantelrohr aufweisen. Das Heißgasrohr kann beispielsweise mit einem Hochtemperaturreaktor, insbesondere einem Pulsationsreaktor oder Schwingfeuerreaktor, verbunden sein und die daraus entstehenden Heißgase mit darin befindlichen Partikeln weiterleiten. Die Rohrleitungsanordnung wird bevorzugt im Hochtemperaturbereich (z. B. Heißgase bis 1.400°C) eingesetzt. Der Begriff Heißgas ist vorliegend breit zu verstehen und meint Gas mit einer erhöhten Temperatur von 250°C bis 1.400°C. Das Heißgas kann dabei ein inertes Gas oder ein oxidierendes Gas oder ein reduzierendes Gas jeweils mit oder ohne Partikelanteil sein.

Gleichzeitig wird durch die Rohrleitungsanordnung der weitere Vorteil erzielt, dass das aus der Austrittsöffnung des Rohrendabschnitts des Heißgasrohrs ausströmende Heißgas durch die Umhüllung mit dem Quenchgas optimal abgekühlt und mit diesem vermischt wird. Hierdurch wird darüber hinaus die im Heißgas stattfindende Reaktion gestoppt. Unter Stoppen der ablaufenden Reaktion ist vorliegend zu verstehen, dass ein Abbruch einer Umwandlungsreaktion (z. B. Kalzinieren, Oxidieren, Trocknen) von im Heißgas geförderten Partikeln erfolgt. Ferner kann vorteilhafterweise die Ausbeute der hergestellten Partikel erhöht werden, da die Neigung zur Ablagerung an der Innenwand des Quenchgasrohrs reduziert werden kann.

Der Begriff Quenchgas meint dabei ein Gas, das im Vergleich zum Heißgas wesentlich kälter ist und bei Mischung mit dem Heißgas zu dessen Abkühlung führt und dadurch die ablaufende Reaktion im Heißgas stoppt. Das Quenchgas weist dabei eine Temperatur von beispielsweise 20°C bis 200°C oder niedriger auf. Das Quenchgas ist dabei beispielsweise ein inertes Gas oder ein oxidierendes Gas. Das Quenchgas wird über das Quenchgasrohr in die Rohrleitungsanordnung eingebracht und ist eingerichtet, das Quenchgas zu führen bzw. zu leiten. Dabei kann das Quenchgasrohr beliebige Geometrien aufweisen, längliche Bereiche, Umlenkungen und/oder Stufen.

Partikel meint vorliegend Feststoffe mit beliebiger Form und einer durchschnittlichen Größe im Bereich von wenigen Nanometern bis einigen Mikrometern.

Zusätzlich ist es erforderlich, dass das im Betriebszustand aus der Austrittsöffnung des Rohrendabschnitts des Heißgasrohrs austretende und mit Partikeln beladene Heißgas vom Quenchgas umhüllt wird, um eine Zerstörung des Quenchgasrohrs aufgrund der hohen Temperaturen von bis zu 1.400 °C zu verhindern. Die bevorzugte Rohrleitungsanordnung löst dieses Problem dadurch, dass das Verbindungselement die Längenausdehnung im Betriebszustand derart aufnehmen kann, dass eine Positionsänderung des Rohrendabschnitts von einer Einbauposition in eine Betriebsposition bewirkt wird.

Der Begriff Einbauzustand beschreibt einen Zustand, in dem die Rohrleitungsanordnung montiert wird, aber noch nicht mit Heißgas und/oder Quenchgas durchströmt wird. Im Einbauzustand ist das Heißgasrohr, insbesondere der die Austrittsöffnung aufweisende Rohrendabschnitt, im Quenchgasrohr in einer Einbauposition angeordnet.

Entsprechend ist mit Betriebszustand vorliegend der Zustand gemeint, in dem das Heißgarohr der Rohrleitungsanordnung von einem Heißgas und das Quenchgasrohr von einem im Vergleich zum Heißgas kälteren Quenchgas durchströmt ist. Im Betriebszustand das Heißgasrohr, insbesondere der die Austrittsöffnung aufweisende Rohrendabschnitt, in der Betriebsposition.

In einer diesbezüglichen Fortbildung des Rohrleitungsanordnung verfügt der die Austrittsöffnung aufweisende Rohrendabschnitt über eine Längsmittelachse und das Quenchgasrohr weist eine Längsmittelachse auf, wobei die beiden Längsmittelachsen im Betriebszustand im Wesentlichen koaxial zueinander ausgerichtet sind. Die im Wesentlichen koaxiale Anordnung der Längsmittelachse des Rohrendabschnitts des Heißgasrohrs zur Längsmittelachse des Quenchgasrohrs ermöglicht vorteilhafterweise die Umhüllung des Heißgases durch Quenchgas. Zweckmäßigerweise sind die Längsmittelachsen von Rohrendabschnitt und Quenchgasrohr koaxial zueinander ausgerichtet. Bei einer koaxialen Ausrichtung der Längsmittelachsen zueinander erfolgt eine ideale Ausströmung des Heißgases aus der Austrittsöffnung des Rohrendabschnitts in das Quenchgasrohr.

Bei einer solchen idealen Ausströmung gelangt das austretende Heißgas nicht an eine Innenwand des Quenchgasrohrs. Mit anderen Worten schirmt das Quenchgas das Heißgas im Quenchgasrohr von der Innenwand des Quenchgasrohrs ab, bis sich eine Mischtemperatur durch die Vermischung der beiden Gasströme einstellt, der die Materialeigenschaften des Quenchgasrohrs konstruktiv standhalten.

Die Anordnung der Austrittsöffnung des Rohrendabschnitts des Heißgasrohrs stromabwärts im Quenchgasrohr kann vorteilhafterweise eine Ablagerung von Partikeln unabhängig von der Einbaulage des Heißgasrohrs zum Quenchgasrohr (vertikal oder horizontal) verhindern, da diese stets sicher mitgefördert werden.

Nach einer weiteren Fortbildung der Rohrleitungsanordnung weist das Verbindungselement einen Kompensator auf, zweckmäßigerweise einen Weichstoffkompensator. Die exakte Bauform des Kompensators wird durch seinen Einsatzort bestimmt, wobei der Kompensator bevorzugt rund, eckig oder oval ausgebildet ist. Auch querschnittsverändernde Kompensatoren sind einsetzbar.

Der Kompensator ist in der Einbauposition unter Vorspannung stehend in der Rohrleitungsanordnung angeordnet, sodass in der Betriebsposition die Positionsänderung des Rohrendabschnitts vom Kompensator ausgeglichen wird. Hierzu ist der Kompensator sandwichartig aufgebaut, wobei insbesondere textile Festigkeitsträger, Elastomere, wie Silikon oder EPDM, und Folien mit Hilfe von Spezialklebern dicht verarbeitet werden und in den Befestigungsbereichen vulkanisiert sind. Besonders bevorzugt ist der Kompensator als glatter, gasdichter Weichstoffkompensator ausgebildet. Der Kompensator weist vorteilhafterweise eine geringe Baulänge und/oder geringe Rückstellkräfte auf, was sich positiv auf die Lasteinbringung bzw. den Spannungszustand der Rohrleitungsanordnung auswirkt. Durch geeignete Gewichtsentlastungen an den heißgehenden Teilen können diese weiter reduziert werden. Dies kann vorteilhafterweise die Aufnahme noch größerer Längenausdehnungen ermöglichen.

Die Vorspannung wird beispielsweise durch eine Anordnung des Heißgasrohrs, insbesondere des Rohrendabschnitts, gegen das Verbindungselement unter Einbringung einer Kraft (beispielsweise gegenseitige Verformung des Heißgasrohrs und des Verbindungselements bei der Montage) bewirkt. Unter Kenntnis der im Betriebszustand vorliegenden Heißgastemperatur und des Wärmeausdehnungskoeffizienten des Werkstoffs des Heißgasrohrs lässt sich die zu erwartende Längenausdehnung des Heißgasrohres ermitteln. Bei einer entsprechend der Längenausdehnung gewählten Vorspannung bzw. translatorischen Verschiebung des Heißgasrohrs gegen das Verbindungselement ist eine genaue Ausrichtung des Rohrendabschnitts im Betriebszustand möglich. Ferner können vorteilhafterweise ein spannungsarmer Betriebszustand für das Heißgasrohr und/oder das Verbindungselement ermöglicht werden. Dies kann sich vorteilhaft auf die Lebensdauer und die Effizienz der Rohrleitungsanordnung auswirken.

Entsprechend einer zusätzlichen Fortbildung der Rohrleitungsanordnung verfügt das Verbindungselement über eine Flanschscheibe und das Heißgasrohr weist ein im Bereich des Verbindungselements um das Heißgasrohr angeordnetes Isoliermantelrohr auf, wobei das Isoliermantelrohr an der Flanschscheibe zur Befestigung des Heißgasrohrs mit dem Verbindungselement angeordnet ist, insbesondere mittels einer stoffschlüssigen Verbindung. Bevorzugt ist das Isoliermantelrohr mit der Flanschscheibe verschweißt. Bevorzugt ist das Isoliermantelrohr aus einem Metall ausgebildet und weist beispielweise eine hohle mit einem Isolationsmaterial gefüllte Wandung auf. Durch das Isoliermantelrohr kann vorteilhafterweise die Wärmleitung zur Flanschscheibe und die Wärmestrahlung zum Verbindungselement, insbesondere zum Kompensator, reduziert werden. Hierdurch gelten z. B. für die Flanschscheibe und das Verbindungselement geringere Temperaturbeständigkeitsanforderungen.

Nach einer weiteren Fortbildung der Rohrleitungsanordnung weist die Rohrleitungsanordnung eine erste Flanschverbindung zur Verbindung des Verbindungselements mit dem Quenchgasrohr und eine zweite Flanschverbindung zur Verbindung des Heißgasrohrs mit dem Verbindungselement auf, wobei die erste und zweite Flanschverbindung gasdicht und reversibel montierbar ausgeführt sind. Die erste Flanschverbindung umfasst beispielsweise einen Flansch, der am Verbindungselement angeordnet ist und einen Gegenflansch, der am Quenchgasrohr angeordnet ist. Die zweite Flanschverbindung umfasst beispielweise einen Flansch, der am Verbindungselement angeordnet ist und einen korrespondierenden Gegenflansch, der am Heißgasrohr angeordnet ist. Die erste und zweite Flanschverbindung werden beispielsweise über Schraubverbindungen gelöst bzw. geschlossen. Die gasdichte und reversible Montage der Flanschverbindungen ermöglicht eine erhöhte Sicherheit gegen Austritt von Gasen und/oder Partikeln sowie eine vereinfachte Wartung/Inspektion und Montage der Rohrleitungsanordnung sowie ein Verhindern von Eindringen von Luft in die Rohrleitungsanordnung.

Gemäß einer zusätzlichen vorteilhaften Ausgestaltung der Rohrleitungsanordnung weist das Verbindungselement einen Hohlraum auf, der das Heißgasrohr umgibt und wobei der Hohlraum zu dem Quenchgasrohr eine Öffnung aufweist, die eingerichtet ist, um einen Teil des Quenchgases im Betriebszustand zur Kühlung des Verbindungselements und/oder des Heißgasrohrs in den Hohlraum zuzuführen und abzuführen. Das Quenchgas kann vorteilhafterweise in die Öffnung einströmen und das Heißgasrohr, das Isoliermantelrohr, das Verbindungselement sowie Flanschverbindungen kühlen. Der Durchmesser des Verbindungselements bzw. der Hohlraum können größer als der Durchmesser des Quenchgasrohrs sein. Dies bedarf dann einer entsprechenden Berücksichtigung der Dimensionierung bzw. Auslegung der Öffnung. Die Öffnung wird beispielsweise durch ein Übergangsstück realisiert. Durch eine entsprechende Dimensionierung der Öffnung und des Hohlraums kann sich ferner vorteilhafterweise ein optimiertes Strömungsprofil des Quenchgases im Hohlraum ausbilden. Die Kühlung kann dadurch weiter optimiert werden. Dies kann sich positiv auf die notwendige Werkstoffwahl für Verbindungselement und Verbindungsflansche und Quenchgasrohr auswirken.

Bevorzugt besteht das Quenchgasrohr aus einem Material ohne besondere Temperaturbeständigkeitsanforderungen, bevorzugt aus Edelstahl 1.4301, 14404 oder 1.4571, und das Heißgasrohr aus einem hitzebeständigen Edelstahl, bevorzugt aus Edelstahl 1.4841 oder 1.4828.

Nach einer weiteren Fortbildung der Rohrleitungsanordnung ist das Verbindungselement außerhalb des Quenchgasrohrs angeordnet. Durch diese Anordnung kann eine vereinfachte Montage aufgrund der verbesserten Zugänglichkeit ermöglicht werden.

Zweckmäßigerweise ist das Verbindungselement innerhalb des Quenchgasrohrs angeordnet. Durch diese Anordnung kann eine erhöhte Kühlung des Verbindungselements ermöglicht werden.

Entsprechend einer zusätzlichen Fortbildung der Rohrleitungsanordnung ist die Austrittsöffnung des Rohrendabschnitts in der Betriebsposition stromabwärts des Verbindungselements angeordnet. Durch eine derartige Positionierung der Austrittsöffnung des Rohrendabschnitts gelangen vorteilhafterweise keine Partikel aus dem Heißgasstrom in den Hohlraum des Verbindungselements, wodurch der Kompensator vor den Partikeln geschützt ist.

Ferner wird die Aufgabe bei einer Prozessanlage der eingangs genannten Art dadurch gelöst, die Rohrleitungsanordnung nach einem der Ansprüche 1 bis 10 ausgebildet ist. Hierbei ist der Hochtemperaturreaktor bevorzugt als ein Pulsationsreaktor ausgebildet.

Nachfolgend wird die Erfindung anhand der beiliegenden Zeichnung näher erläutert und in dieser zeigen
- Figur 1: eine schematische Teilansicht einer ersten bevorzugten Ausführungsform einer Rohrleitungsanordnung zum Stoppen einer in der Rohrleitungsanordnung ablaufenden Reaktion im Einbauzustand,
- Figur 2: eine schematische Teilansicht der ersten bevorzugten Ausführungsform einer Rohrleitungsanordnung zum Stoppen einer in der Rohrleitungsanordnung ablaufenden Reaktion im Betriebszustand,
- Figur 3: eine schematische Teilansicht einer weiteren bevorzugten Ausführungsform einer Rohrleitungsanordnung zum Stoppen einer in der Rohrleitungsanordnung ablaufenden Reaktion im Betriebszustand und
- Figur 4: eine schematische Teilansicht einer bevorzugten Ausführungsform einer Prozessanlage.

Sofern keine anderslautenden Angaben gemacht werden, bezieht sich die nachfolgende Beschreibung auf sämtliche in der Zeichnung illustrierten Ausführungsformen einer Rohrleitungsanordnung 1 zum Stoppen einer in der Rohrleitungsanordnung 1 ablaufenden Reaktion.

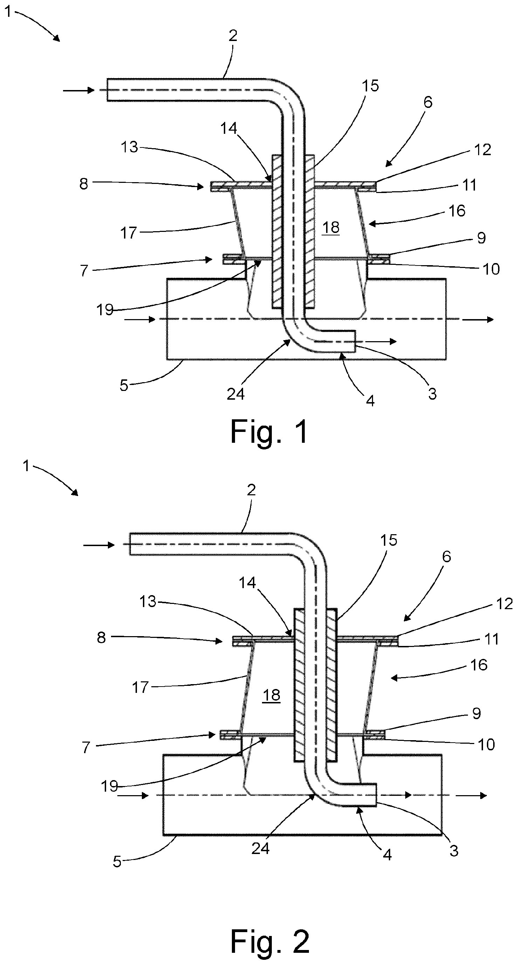

Fig. 1 zeigt eine schematische Teilansicht einer bevorzugten Rohrleitungsanordnung 1 zum Stoppen einer in der Rohrleitungsanordnung 1 ablaufenden Reaktion im Einbauzustand. Im Einbauzustand ist die Rohrleitungsanordnung 1 nicht durchströmt.

Die Rohrleitungsanordnung 1 weist ein zweckmäßigerweise aus einem hitzebeständigen Edelstahl ausgebildetes Heißgasrohr 2 auf. Entsprechende hitzebeständige Edelstähle sind beispielsweise Edelstähle mit der Materialnummer 1.4841 oder 1.4828. Das Heißgasrohr 2 weist einen über eine Austrittsöffnung 3 verfügenden und eine Längsmittelachse X-X aufweisenden Rohrendabschnitt 4 auf.

Zudem verfügt die Rohrleitungsanordnung 1 über ein Quenchgasrohr 5. Das Quenchgasrohr 5 weist keine besonderen Temperaturbeständigkeitsanforderungen auf, sodass es beispielsweise aus Edelstahl mit der Materialnummer 1.4301 fertigbar ist. In der gezeigten Ausführungsform weist das Quenchgasrohr 5 einen im Vergleich zum Heißgasrohr 2 größeren Durchmesser auf. Das Quenchgasrohr 5 weist eine Längsmittelachse Y-Y auf.

Die Rohrleitungsanordnung 1 verfügt weiter über ein Verbindungselement 6, das eingerichtet ist, um das Heißgasrohr 2 mit dem Quenchgasrohr 5 miteinander zu verbinden.

Das Verbindungselement 6 weist hierzu eine erste und eine zweite Flanschverbindung 7, 8 auf. Die erste Flanschverbindung 7 ist zwischen dem Quenchgasrohr 5 und dem Verbindungselement 6 angeordnet. Die erste Flanschverbindung 7 verfügt zur Verbindung von Quenchgasrohr 5 und Verbindungselement 6 über einen Flansch 9, der am Verbindungselement 6 angeordnet ist und einen entsprechenden am Quenchgasrohr 5 angeordneten als Gegenstück zum Flansch 9 ausgebildeten Flansch 10.

Die zweite Flanschverbindung 8 ist zwischen dem Verbindungselement 6 und dem Heißgasrohr 2 angeordnet und weist zu deren Verbindung einen Flansch 11 auf, der am Verbindungselement 6 angeordnet ist, und einen entsprechenden am Heißgasrohr 2 angeordneten als Gegenstück zum Flansch 11 ausgebildeten Flansch 12. Der Flansch 12 ist hierbei als Flanschscheibe 13 ausgebildet, die eine Durchtrittsöffnung 14 für das Heißgasrohr 2 aufweist. Zur einfacheren Anbindung des Heißgasrohrs 2 an die Flanschscheibe 13 verfügt das Heißgasrohr 2 über ein Isoliermantelrohr 15. Das Isoliermantelrohr 15 ist mit der Flanschscheibe 13, insbesondere stoffschlüssig, verbunden. Bevorzugt ist die Flanschscheibe 13 mit dem Isoliermantelrohr 15 verschweißt.

Die erste und zweite Flanschverbindung 7, 8 sind in der dargestellten ersten Ausführungsform jeweils gasdicht und reversibel montierbar ausgeführt.

Ferner weist das Verbindungselement 6 einen Kompensator 16 auf, der zweckmäßigerweise als Weichstoffkompensator 17 ausgebildet ist. Der Kompensator 16 ist bevorzugt sandwichartig aufgebaut, wobei insbesondere textile Festigkeitsträger, Elastomere, wie Silikon oder EPDM, und Folien mit Hilfe von Spezialklebern dicht verarbeitet werden. Der als Weichstoffkompensator 17 ausgeführte Kompensator 16 ist in der dargestellten Ausführungsform aus einem glatten, gasdichten Silikon ausgebildet.

Weichstoffkompensatoren 17 weisen auf Grund ihrer Elastomer-Eigenschaften geringe Rückstellkräfte/Reaktionskräfte auf, so dass verbleibende Lasten auf die heißgehenden Bauteile, wie das Heißgasrohr 2, minimal auftreten. Diese können zusätzlich durch geeignete Gewichtsentlastungen an den heißgehenden Bauteilen reduziert werden. Der als Weichstoffkompensator 17 ausgebildete Kompensator 16 wird über Flanschverbindungen 7, 8 dicht montiert, so dass die Gasdichtheit gegeben ist. Durch Lösen der Flanschverbindungen 7, 8 ist der Kompensator 16 leicht zu inspizieren, zu reinigen bzw. auszutauschen.

Hierzu ist das Heißgasrohr 2 im Bereich des Kompensators 16 mit dem zweckmäßigerweise metallisch dicht verschweißten Isoliermantelrohr 15 umgeben, das den Kraftfluss zur Flanschscheibe 13 mit reduzierter Wärmeleitung herstellt. Das Isoliermantelrohr 15 ist dazu mit einem geeigneten Isoliermaterial gefüllt, das die Wärmeleitung an der Flanschscheibe 13 des Kompensators 16, soweit reduziert, wie es die Temperaturbeständigkeit des Elastomers zulässt.

Die äußere Oberflächentemperatur am Isoliermantelrohr 15 wird dadurch ausreichend reduziert, sodass die Wärmestrahlung auf das Elastomer des Kompensators 16 keinen schädigenden Einfluss hat. Zusätzlich wird der Durchmesser des Kompensators 16 und dessen Höhe nicht nur entsprechend der axialen und lateralen Verschiebung zwischen der Einbauposition und der Betriebsposition dimensioniert, sondern auch so, dass die Zuführung und Abführung des Quenchgases in diesem Bereich mit solch einem optimierten Strömungsprofil verläuft, dass eine Überhitzung des Elastomers sicher ausgeschlossen ist.

Das Heißgasrohr 2 durchdringt das in der gezeigten Ausführungsform außerhalb des Quenchgasrohrs 5 angeordnete Verbindungselement 6 samt Kompensator 16 in vertikaler Richtung.

Das Heißgasrohr 2 weist nach der vertikalen Durchdringung des Verbindungselements 6 eine 90° Umlenkung 24 auf an die sich ein über die Austrittsöffnung 3 verfügender Rohrendabschnitt 4 anschließt. Der Rohrendabschnitt 4 erstreckt sich horizontal im Quenchgasrohr 5, wobei die Längsmittelachse X-X des Rohrendabschnitts 4 in der gezeigten Ausführungsform unterhalb der Längsmittelachse Y-Y des Quenchgasrohrs 5 in einer Einbauposition angeordnet ist. Die Strömungsrichtung des Quenchgases und des Heißgases sind in der gezeigten Ausführungsform parallel zueinander ausgerichtet. Das Verbindungselement 6 ist also geeignet, um den die in Strömungsrichtung des Quenchgases weisende Austrittsöffnung 3 für das Heißgas aufweisenden Rohrendabschnitt 4 des Heißgasrohrs 2 im Quenchgasrohr 5 anzuordnen.

Der Kompensator 16 ist in der Einbauposition unter Vorspannung stehend in der Rohrleitungsanordnung 1 angeordnet, sodass in einer Betriebsposition eine Positionsänderung des Rohrendabschnitts 4 aufgrund einer Längenausdehnung des Heißgasrohrs 2 vom den Kompensator 16 ausgeglichen wird. Auf diese Weise sind erhebliche unterschiedliche Längenausdehnungen, die durch das im Heißgasrohr geförderte Heißgas auftreten, kompensierbar.

Neben der Kompensation von Differenzen in der Längenausdehnung können folgende Anforderungen an die konstruktive Ausführung des Kompensators 16 gestellt werden:
- Eignung für eine Prozesstemperatur von bis zu 1.400 °C
- Eignung zur Realisation von Längenausdehnungen die durch plötzliche Temperaturabsenkung (Quenchfunktion) von Heißgas (bevorzugt ca. 1.100 °C) auf niedrigere Gastemperaturen (bevorzugt z. B. von 200 °C bis 80 °C), realisiert werden
- Minimale Rückstellkräfte zur Vermeidung hoher Krafteinwirkung auf die eingesetzten Bauteile mit ihren Materialeigenschaften, insbesondere bei den hohen Temperaturen
- Gasdichte Ausführung zum Schutz gegen eventuell austretende giftige und/oder gefährliche Gase bzw. gegen das Eindringen von Luft in die Rohrleitungsanordnung 1
- Eignung für feststoffhaltige Gase, Vermeidung von Ablagerungen mit oder ohne Einschränkung auf die Kompensationsfunktion
- Beliebige Einbaulage des Kompensators 16, insbesondere horizontal oder vertikal
- Reinigbarkeit der Rohrleitungsanordnung 1
- Inspizierbarkeit der Rohrleitungsanordnung 1

Alternative Anordnungen von Rohrendabschnitt 4 und Quenchgasrohr 5 sind in nicht dargestellten Ausführungsformen realisiert.

Das Verbindungselement 6 weist darüber hinaus einen zwischen dem Kompensator 16 und dem Isoliermantelrohr 15 ausgebildeten Hohlraum 18 auf, der das Heißgasrohr 2, insbesondere das Isoliermantelrohr 15 umgibt. Der Hohlraum 18 weist zu dem Quenchgasrohr 5 eine Öffnung 19 auf, die geeignet ist, um einen Teil des Quenchgases zur Kühlung des Verbindungselements 6 und/oder des von einem Isoliermantelrohr 15 ummantelten Heißgasrohrs 2 in den Hohlraum 18 zu- und abzuführen. Dabei kann der Durchmesser des den Kompensator 16 aufweisenden Verbindungselements 6 größer als der des Quenchgasrohrs 5 sein.

Fig. 2 zeigt eine schematische Teilansicht einer erfindungsgemäßen Rohrleitungsanordnung 1 zum Stoppen einer in der Rohrleitungsanordnung 1 ablaufenden Reaktion im Betriebszustand. Vorliegend wird nur auf die Unterschiede zu Fig. 1 eingegangen:
Im Betriebszustand wird die Rohrleitungsanordnung 1 mit Heißgas und Quenchgas durchströmt. Die Strömungsrichtung von Heißgas und Quenchgas sind jeweils durch Pfeile dargestellt. Dabei wird das Heißgasrohr 2 von einem Partikel fördernden Heißgas und das Quenchgasrohr 5 von einem im Vergleich zum Heißgas kälteren Quenchgas durchströmt, wobei sich Heißgas und Quenchgas nach dem Austritt des Heißgases aus der Austrittsöffnung 3 des Rohrendabschnitts 4 in das Quenchgasrohr 5 miteinander vermischen und als Mischgas mit reduzierter Temperatur aus dem Quenchgasrohr 5 austreten.

Aufgrund der Durchströmung mit Heißgas erfährt das Heißgasrohr 2 im Betriebszustand eine Längenausdehnung. Das Verbindungselement 6 ist mittels des Kompensators 16 ausgebildet, um die im Betriebszustand auftretende Längenausdehnung des Heißgasrohrs 2 derart aufzunehmen, dass die Positionsänderung des Rohrendabschnitts 4 von der Einbauposition in die Betriebsposition bewirkt wird, sodass das im Betriebszustand aus der Austrittsöffnung in das Quenchgasrohr 5 ausströmende Heißgas vom Quenchgas umhüllt wird. In Folge der Aufnahme der Längenausdehnung des Heißgasrohrs 2 verformt sich der als Weichstoffkompensator 17 ausgebildete Kompensator 16. Hierdurch richtet sich das den Kompensator 16 aufweisende Verbindungselement 6 in der Regel in einer im Vergleich zur Fig. 1 spannungsärmeren Anordnung neu aus.

Durch die Positionsänderung ist in der Betriebsposition die Längsmittelachse X-X des Rohrendabschnitts 4, die durch die Austrittsöffnung 3 des Rohrendabschnitts 4 des Heißgasrohrs 2 verläuft, koaxial zu der Längsmittelachse Y-Y des Quenchgasrohrs 5 ausgerichtet. In anderen nicht dargestellten Ausführungsformen richten sich die beiden Längsmittelachsen X-X und Y-Y zumindest im Wesentlichen koaxial zueinander aus. Ferner verschiebt sich in der Betriebsposition der Rohrendabschnitt 4 nicht nur in radialer Richtung, sondern der Rohrendabschnitt 4 ändert seine Position auch dahingehend, dass die Austrittsöffnung 3 des Rohrendabschnitts 4 nunmehr stromabwärts des Verbindungselements 6 angeordnet ist.

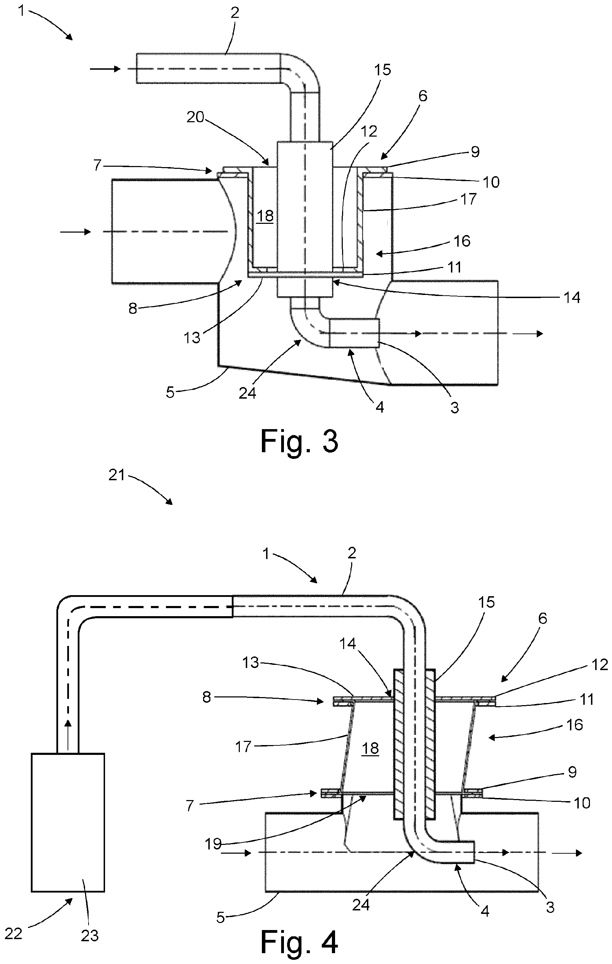

In Fig. 3 wird eine schematische Teilansicht einer alternativen Ausführungsform einer Rohrleitungsanordnung 1 zum Stoppen einer in der Rohrleitungsanordnung 1 ablaufenden Reaktion im Betriebszustand gezeigt.

Im Unterschied zu der in Fig. 2 gezeigten Ausführungsform ist das Verbindungselement 6 innerhalb des Quenchgasrohrs 5 angeordnet. Der Strömungsweg des Quenchgasrohrs 5 weist in Fig. 3 statt eines geraden Verlaufs einen stufenförmigen Verlauf auf. Hierdurch ist es möglich das Verbindungselement 6 so auszubilden, dass das den Kompensator 16 aufweisende Verbindungselement 6 nicht außerhalb, wie in Fig. 1 und 2 gezeigt, sondern innerhalb des Quenchgasrohrs 5 angeordnet ist. Durch diese geänderte Positionierung des Verbindungselements 6 kann der Kompensator 16 nunmehr direkt durch das Quenchgas angeströmt und somit gekühlt werden.

Das Verbindungselement 6 weist vorliegend eine zur Umgebung hin gerichtete Einbauöffnung 20 auf. Dem Vorteil der verbesserten Kühlung des Kompensators 16 steht allerdings ein geringfügig größer Aufwand beim Zusammenbau der einzelnen Bauteile gegenüber.

Fig. 4 zeigt eine schematische Teilansicht einer bevorzugten Ausführungsform einer Prozessanlage 21 zur Herstellung von insbesondere nanoskaligen Partikeln. Die Prozessanlage 21 verfügt über einen Hochtemperaturreaktor 22 und eine mit dem Hochtemperaturreaktor 22 verbundene Rohrleitungsanordnung 1. Der Hochtemperaturreaktor 22 ist zweckmäßigerweise als ein Pulsationsreaktor 23 ausgebildet. Die Rohrleitungsanordnung ist hierbei als eine in den Fign. 1 bis 3 beschriebene Rohrleitungsanordnung 1 ausgebildet.

## Patentansprüche

1. Rohrleitungsanordnung (1) zum Stoppen einer in der Rohrleitungsanordnung (1) ablaufenden Reaktion, mit einem in einem Betriebszustand von einem Partikel fördernden Heißgas durchströmten und aufgrund der Durchströmung mit Heißgas eine Längenausdehnung erfahrenden Heißgasrohr (2), mit einem im Betriebszustand von einem im Vergleich zum Heißgas kälteren Quenchgas durchströmten Quenchgasrohr (5), und mit einem das Heißgasrohr (2) und das Quenchgasrohr (5) verbindende Verbindungselement (6), **dadurch gekennzeichnet, dass** das Heißgasrohr (2) das Verbindungselement (6) durchdringt und das Verbindungselement (6) geeignet ist, um einen eine in Strömungsrichtung des Quenchgases weisende Austrittsöffnung (3) für das Heißgas aufweisenden Rohrendabschnitt (4) des Heißgasrohrs (2) im Quenchgasrohr (5) anzuordnen, wobei der Rohrendabschnitt (4) in einem Einbauzustand, in dem die Rohrleitungsanordnung (1) nicht durchströmt ist, in einer Einbauposition angeordnet ist, und wobei das Verbindungselement (6) ausgebildet ist, um die im Betriebszustand auftretende Längenausdehnung des Heißgasrohrs (2) derart aufzunehmen, dass eine Positionsänderung des Rohrendabschnitts (4) von der Einbauposition in eine Betriebsposition bewirkt wird, sodass das im Betriebszustand aus der Austrittsöffnung (3) in das Quenchgasrohr (5) ausströmende Heißgas vom Quenchgas umhüllt wird.

2. Rohrleitungsanordnung (1) nach Anspruch 1, **dadurch gekennzeichnet, dass** der die Austrittsöffnung (3) aufweisende Rohrendabschnitt (4) über eine Längsmittelachse (X-X) verfügt und das Quenchgasrohr (5) eine Längsmittelachse (Y-Y) aufweist, wobei die beiden Längsmittelachsen (X-X, Y-Y) im Betriebszustand im Wesentlichen koaxial zueinander ausgerichtet sind.

3. Rohrleitungsanordnung (1) nach Anspruch 1 oder 2, **dadurch gekennzeichnet, dass** das Verbindungselement (6) einen Kompensator (16) aufweist, wobei der Kompensator (16) zweckmäßigerweise als Weichstoffkompensator (17) ausgebildet ist.

4. Rohrleitungsanordnung (1) nach Anspruch 3, **dadurch gekennzeichnet, dass** der Kompensator (16) in der Einbauposition unter Vorspannung stehend in der Rohrleitungsanordnung (1) angeordnet ist, sodass in der Betriebsposition die Positionsänderung des Rohrendabschnitts (4) vom Kompensator (16) ausgeglichen wird.

5. Rohrleitungsanordnung (1) nach einem der vorhergehenden Ansprüche, **dadurch gekennzeichnet, dass** das Verbindungselement (6) über eine Flanschscheibe (13) verfügt und das Heißgasrohr (2) ein im Bereich des Verbindungselements (6) um das Heißgasrohr (2) angeordnetes Isoliermantelrohr (15) aufweist, wobei das Isoliermantelrohr (15) an der Flanschscheibe (13) zur Befestigung des Heißgasrohrs (2) mit dem Verbindungselement (6) angeordnet ist, insbesondere mittels einer stoffschlüssigen Verbindung.

6. Rohrleitungsanordnung (1) nach einem der vorhergehenden Ansprüche, **dadurch gekennzeichnet, dass** die Rohrleitungsanordnung (1) eine erste Flanschverbindung (7) zur Verbindung des Verbindungselements (6) mit dem Quenchgasrohr (5) und eine zweite Flanschverbindung (8) zur Verbindung des Heißgasrohrs (2) mit dem Verbindungselement (6) aufweist, wobei die erste und zweite Flanschverbindung (7, 8) gasdicht und reversibel montierbar ausgeführt sind.

7. Rohrleitungsanordnung (1) nach einem der vorhergehenden Ansprüche, **dadurch gekennzeichnet, dass** das Verbindungselement (6) einen Hohlraum (18) aufweist, der das Heißgasrohr (2) umgibt und wobei der Hohlraum (18) zu dem Quenchgasrohr (5) eine Öffnung (19) aufweist, die eingerichtet ist, um einen Teil des Quenchgases im Betriebszustand zur Kühlung des Verbindungselements (6) und/oder des Heißgasrohrs (2) in den Hohlraum (18) zuzuführen und abzuführen.

8. Rohrleitungsanordnung (1) nach einem der vorhergehenden Ansprüche, **dadurch gekennzeichnet, dass** das Quenchgasrohr (5) aus einem Material ohne besondere Temperaturbeständigkeitsanforderungen besteht, bevorzugt aus Edelstahl 1.4301, 14404 oder 1.4571, und das Heißgasrohr (2) aus einem hitzebeständigen Edelstahl besteht, bevorzugt aus Edelstahl 1.4841 oder 1.4828.

9. Rohrleitungsanordnung (1) nach einem der vorhergehenden Ansprüche, **dadurch gekennzeichnet, dass** das Verbindungselement (6) außerhalb des Quenchgasrohrs (5) angeordnet ist.

10. Rohrleitungsanordnung (1) nach einem der Ansprüche 1 bis 8, **dadurch gekennzeichnet, dass** das Verbindungselement (6) innerhalb des Quenchgasrohrs (5) angeordnet ist.

11. Rohrleitungsanordnung (1) nach einem der vorhergehenden Ansprüche, **dadurch gekennzeichnet, dass** die Austrittsöffnung (3) des Rohrendabschnitts (4) in der Betriebsposition stromabwärts des Verbindungselements (6) angeordnet ist.

12. Prozessanlage (21) zur Herstellung von insbesondere nanoskaligen Partikeln mit einem Hochtemperaturreaktor (22) und einer mit dem Hochtemperaturreaktor (22) verbundenen Rohrleitungsanordnung (1), wobei der Hochtemperaturreaktor ein zumindest teilweise durch die Rohrleitungsanordnung (1) strömendes Heißgas erzeugt, **dadurch gekennzeichnet, dass** die Rohrleitungsanordnung (1) nach einem der Ansprüche 1 bis 10 ausgebildet ist.

13. Prozessanlage (21) nach Anspruch 11, **dadurch gekennzeichnet, dass** der Hochtemperaturreaktor (22) als ein Pulsationsreaktor (23) ausgebildet ist.
